# EUROPEAN PATENT APPLICATION

(11) **EP 1 816 536 A2**
(43) Date of publication of application: **08.08.2007**
(21) Application number: 07101637.2
(22) Date of filing: 02.02.2007
(51) Int. Cl.: G05D 23/19

(54) **Temperature controlling device**

(30) Priority: 02.02.2006 IL 17351006
(71) Applicant: Rafael-Armament Development Authority Ltd., 31021 Haifa (IL)
(72) Inventor: Amit, Bahat, Kiryat Yam (IL)
(74) Representative: Messulam, Alec Moses

(57) **Abstract**

A test control circuitry conducts an electrical current through a thermo electric cooler (62) for the purpose of testing the operability of a thermal control unit (60). At temperatures higher than a temperature threshold, this electrical current is directed such that the thermo electric cooler cools a temperature sensitive switch (68). The direction of the electrical current is inverted at temperatures lower than such temperature, causing heat to flow to the temperature sensitive switch. These specified temperatures of the test control circuitry are programmable either manually or automatically from a remote computer linked to the control circuitry. Optionally, a temperature sensor such as a thermo-couple or thermistor and their associated electrical circuitry is used as temperature sensitive switch. In such cases its temperature threshold is programmable.

## Description

### FIELD OF THE INVENTION

The present invention relates in general to controlling temperature and in particular to thermoelectric cooling, testability and reliability of thermal control systems.

### BACKGROUND OF THE INVENTION

Systems exposed to a wide temperature range such as satellites or missiles typically rely on thermal control units consisting of heating elements, temperature sensitive switches and sensors for controlling their temperatures. Such thermal control units provide for keeping the temperature of one or more components and or subsystems within an operating temperature range. Heat is typically applied when the ambient temperature of such components or subsystem units drop below a lower temperature threshold associated with the lower end of the temperature range. The heat is stopped when the ambient temperature increases above a corresponding upper temperature limit. The reliability of the entire system of the missile or satellite is dependent on the operability of the temperature sensors and/or temperature sensitive switches. However, testing the operability of such devices is practically limited because typically the thermal mass and thermal constants of such systems are considerably large and therefore large thermal chambers and long operating sessions are involved with such testing. Alternatively, the thermal sensitive switches and/or sensors can be cooled by injecting cooled air or nitrogen onto them. However, the temperature of such cooled components is not definite enough..

Heat pumps also referred to as Peltier devices or thermoelectric coolers (TECs) are well known in the art. Such devices are operative within a temperature range and provide for heating or cooling an object at a specified power when thermally connected to a TEC. Typically a TEC consists of a plurality of semiconductor pieces disposed between two thermal surfaces. These semiconductor pieces are arranged such that interleaved n-type and p-type semiconductor pieces are electrically connected in series. All these semiconductor pieces thermally connect in parallel the two thermal surfaces. Heat is transferred by means of a direct electric current when conducted through the semiconductor pieces from one thermal surface to the other. The hot pole of a TEC is the surface thermally connected to all p-n junctions in which the electrical current is directed from a p-type to an n-type piece of semiconductor. The opposing surface, which is thermally connected to the n-p junctions in which same current is conducted from an n-type to a p-type semiconductor, is cooled by such current and therefore constitutes the cool pole. By inverting the polarity of the electrical current the hot pole becomes cold and the cold pole turns hot.

### BRIEF DESCRIPTION OF THE DRAWINGS

Fig. 1 is a schematic cross sectional view of a temperature controlling device of the present invention;
Fig. 2 is a top side view of a temperature controlling device according to a preferred embodiment of the present invention;
Fig. 3 is a sectional view of the temperature controlling device of Fig 2.

### DETAILED DESCRIPTION OF THE PRESENT INVENTION

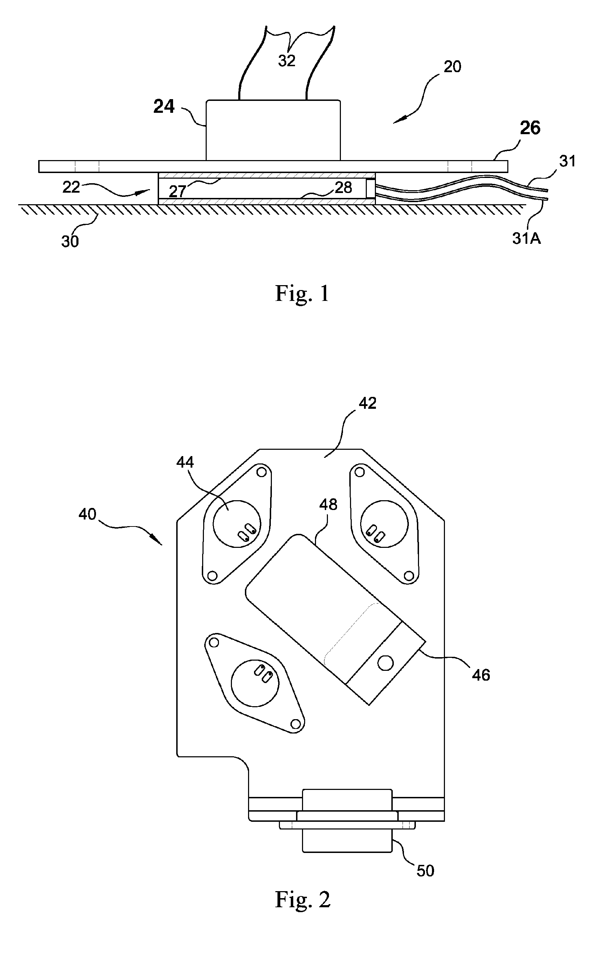

The present invention is a device that regulates under certain circumstances the temperature of a temperature sensitive switch or sensor activating a heating element of a thermal control unit of an appliance, typically for testing its operability. Reference is made to **Fig. 1** in which a sectional view in a temperature controlling device (TCD) of the invention is schematically shown. The main components of TCD **20** are thermoelectric cooler (TEC) **22** and temperature sensitive switch **24** both attached to thermal plate **26.** Temperature sensitive switch **24** normally activates a heating element of a thermal control unit of the appliance. The thermal plate is a good conductor of heat unto which the other components of the TCD are coupled. The thermal plate serves mainly for conveniently attaching the TCD to the thermally controlled component or subsystem of the appliance. In some embodiments of the invention the TCD consists only of a temperature sensitive switch attached to a TEC. TEC **22** has two poles, one heated and one cooled. Pole **27** of TEC **22** is thermally connected to thermal plate **26.** Pole **28,** which is the other pole of TEC **22,** is thermally connected to the component or subsystem unit of the appliance that is thermally controlled, referred to hereinafter as thermally controlled subsystem **30.** Thermal plate **26** is preferably attachable to the thermally controlled subsystem or to any portion of the appliance such that a good thermal contact between TEC **22** and thermally controlled subsystem **30** is provided.

Electrical wires **31** and **31A** conduct a direct electrical current through TEC **22.** Heat is transferred from the thermally controlled subsystem to the thermal plate when this current is conducted in a first direction. Heat is transferred in the opposite direction when the polarity of this electrical current is inverted. TEC **22** when not operative and thermal plate **26** are good conductors of heat. Therefore, the thermal connectivity of the temperature sensitive switch **24** and the thermally controlled subsystem is not significantly degraded although TEC **22** and thermal plate **26** perform as an additional thermal buffer disposed in between them.

By operating TCD **20,** temperature sensitive switch **24,** such as a thermostat, thermally connected to thermal plate **26,** opens or closes an electrical circuit powering the electrical heaters of the thermal control unit, not shown. This electrical circuit is opened by electrically disconnecting wires **32** one from the other when the temperature of the switch exceeds a first temperature threshold. Switch **24** connects wires **32** when the temperature is below this first temperature threshold. Similarly, another optional switch, not shown, is also thermally connected to plate **26.** This optional temperature sensitive switch is a redundant component included for the sake of reliability of the system. The optional switch opens the electrical circuit powering the heating elements when its temperature exceeds a second temperature threshold. The second threshold is not lower than the first one in which the thermal control unit normally stops heating. When both temperature sensitive switches are closed the temperature is not higher than the first temperature threshold. The thermal control unit applies heat when the temperature of plate **26** is lower than the first temperature threshold. Therefore the temperature of the thermally controlled subsystem of the appliance is kept within a temperature range whose limits are associated with these two temperature thresholds.

A test control circuitry, not shown, facilitates conducting an electrical current through TEC **22** for the purpose of testing the operability of the thermal control unit. At temperatures higher than a temperature of one of the aforementioned temperature thresholds, this electrical current is directed such that TEC **22** cools both temperature sensitive switch **24** and the optional additional switch not shown. The direction of the electrical current is inverted at temperatures lower than such temperature, causing heat to flow to the temperature sensitive switch **24** and the optional additional switch. These specified temperatures of the test control circuitry are programmable either manually or automatically from a remote computer linked to the control circuitry. Optionally, a temperature sensor such as a thermo-couple or thermistor and their associated electrical circuitry are used as temperature sensitive switches. In such cases their temperature thresholds are similarly programmable.

The thermal mass of a portion of the thermally controlled subsystem, or a portion of the appliance, to which thermal plate **26** and TEC **22** are thermally connectable, serves as a heat sink or as a heat reservoir to, or from, heat is conducted by the TCD. Hence the temperature of the temperature sensitive switches normally activating a heating element of a thermal control unit of an appliance is regulated also in cases in which the temperature of the thermally controlled subsystem significantly differs from its specified temperature thresholds.

A thermal plate of a TCD of the invention is typically made of a good thermally conducting metal such as aluminum. Common ready made TECs are specified by their operating temperature ranges and the maximal heat flux they pump. Optionally a number of TECs are stacked to provide an extended temperature range or are connected in parallel to provide a required heat flux. TCDs of the invention are installed as integral parts of the thermal control unit of the appliance and are geometrically configurable to be incorporated as such.

Reference is now made to **Figs 2 - 3** showing respectively a top side view and a sectional view of a TCD according to two preferred embodiments of the present invention. In **Fig. 2** TCD **40** attachable to a heating means such as a thermal blanket of a thermal control unit of an appliance is shown. Thermal plate **42** serves as a thermal buffer to heat conducted by TCD **40** between its temperature sensitive switches and this heating means. Temperature sensitive switches **44** are attached on top of thermal plate **42** such that a good thermal connection between switches **44** and plate **42** is provided. Two of these switches have been described hereinabove. An optional redundant temperature sensitive switch, not shown, is electrically connected in parallel to the switch activating the heating element of the thermal control unit and having the aforementioned first temperature threshold. Temperature sensing device **46** such as a thermistor and its amplifying circuitry **48** are attached on top of plate **42.** Such an optional temperature sensing device provides for example for testing the proper operation of the temperature sensitive switches. The TEC of TCD **40,** not shown, is attached to the bottom of plate **42.** Electrical wires, not shown, connect between TEC, switches and the amplifying circuitry and connector **50.**

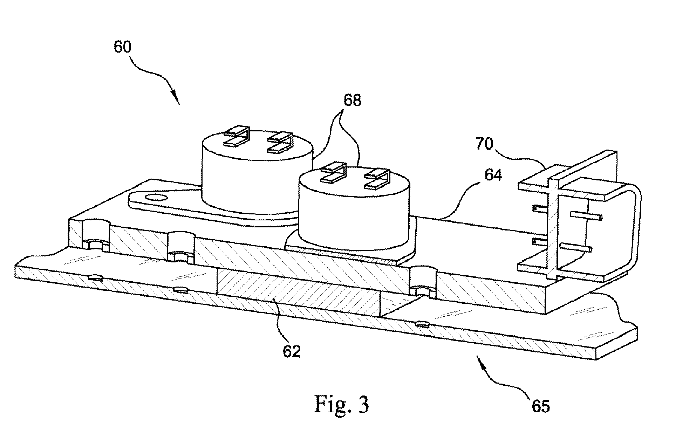

In **Fig. 3** TCD **60** is shown consisting of TEC **62** attached to thermal plate **64.** Thermal plate **64** is firmly secured to section **65** of the thermally controlled subsystem of the appliance, such that a good thermal connection is provided between TEC **62** and section **65.** Two temperature sensitive switches **68** are attached on top of thermal plate **64** electrically connected, to connector **70.**

TCDs of the present invention provide for testing the operability of thermal control units incorporated in appliances. Typically the thermally controlled subsystems have a substantial thermal mass, and therefore by incorporating TCDs in such systems temperature of their temperature sensitive switches can conveniently be brought to a desirable range for the purpose of testing. Such testing is carried out without regulating the temperature of the entire appliance. TCDs of the invention can be integrated into a computer system of the appliances, providing for built -in test procedures operative in coordination with the operational programs of these appliances. Alternatively TCDs of the invention are connectable to dedicated test equipment providing for conveniently testing the operability of the thermal control units of a non-operating appliance.

## Claims

1. A temperature controlling device (TCD) for testing the operability of a thermal control unit of an appliance, said TCD comprising:
• at least one thermoelectric cooler (TEC) thermally connectable to a subsystem of said appliance, wherein said subsystem is thermally controlled by said thermal control unit, and
• at least one temperature sensitive switch for activating a heating element of said thermal control unit, said at least one temperature sensitive switch thermally connected to said TEC.

2. A TCD as in claim 1, further comprising a thermal plate attachable to any of the items of the group consisting of said appliance and a thermally controlled subsystem of said appliance, wherein said thermal plate is thermally connected to said at least one TEC, and wherein said thermal plate is thermally connected to said at least one temperature sensitive switch.

3. A TCD as in any of claims 1, or 2, integrated into a computer of said appliance, wherein said thermal control unit is linked to said computer.

4. A TCD as in any of claims 1, or 2, integrated into testing equipment for testing said thermal control unit.
